# EUROPEAN PATENT SPECIFICATION

(11) **EP 0 381 188 B1**
(45) Date of publication and mention of the grant of the patent: **25.01.1995**
(21) Application number: 90101904.2
(22) Date of filing: 31.01.1990
(51) Int. Cl.: F16F 9/44, F16F 9/02, F16F 9/06

(54) **A hydraulically blockable gas spring**
Hydraulisch blockierbare Gasfeder
Ressort sous gaz blocable hydrauliquement

(30) Priority: 01.02.1989 DE 3902882
(43) Date of publication of application: 08.08.1990
(73) Proprietor: Stabilus GmbH, D-56070 Koblenz (DE)
(72) Inventor: Wagner, Udo, D-5421 Dachsenhausen (DE)
(74) Representative: Weickmann, Heinrich, Dipl.-Ing.

(56) References cited:
- DE-A- 1 554 258
- US-A- 4 709 790

## Description

This invention relates to a hydraulically blockable gas spring comprising a cylinder member having an axis, a hydraulic fluid chamber being confined within said cylinder member, said hydraulic fluid chamber having a first end and a second end axially opposite each other, an axially extending first piston rod section being sealingly guided through said first end of said hydraulic fluid chamber, said first piston rod section being connected with a piston member within said hydraulic fluid chamber, said first piston rod section and said piston member providing a piston rod-piston unit axially movable with respect to said cylinder member, said piston member defining two hydraulic fluid compartments within said hydraulic fluid chamber, said hydraulic fluid compartments being interconnectable by hydraulic fluid passage means, a valve unit being allocated to said hydraulic fluid passage means for selectively opening and closing said hydraulic fluid passage means, said valve unit being actuatable by external actuating means from outside said hydraulic fluid chamber, said piston rod-piston unit being subject to the biasing action of a volume of pressurized gas, said volume of pressurized gas being confined within a gas chamber adjacent said second end of said hydraulic fluid chamber, said gas chamber being separated from said hydraulic fluid chamber by a separating wall.

Such a hydraulically blockable gas spring is known from DE-A-155 4 201. When, after opening the valve unit of said known gas spring, the first piston rod section, i.e. the piston rod, is moved axially inwards of the cylinder member by an external inwardly directed force, an increasing volume of the hydraulic fluid chamber is occupied by the piston rod. Thus, a corresponding part of the hydraulic fluid is urged toward the second end of the cylinder member and the separating wall is moved toward the second end of the cylinder member with the pressure of the pressurized gas being increased.

When the valve unit is closed again, a new position of the piston rod with respect to the cylinder member is obtained corresponding to a desired length of the gas spring. When the valve unit is opened again, the pressurized gas expands and drives the separating wall toward the first end. Thus, the volume of the hydraulic fluid chamber decreases, and correspondingly the piston rod is expelled from the cylinder until the valve unit is closed again. Then, the gas spring is blocked again and is adjusted to a further operational length corresponding to the operator's wish. When the valve unit is closed, the piston rod is blocked with respect to the cylinder member. The blocking effect is, however, dependent on the direction of the force acting onto the piston rod against the blocking effect. When an external force is applied to the piston rod in a direction corresponding to withdrawal of the piston rod out of the cylinder member, the volume of hydraulic fluid in the annular fluid compartment between the piston member and the first end of the cylinder member substantially rigidly resists to a withdrawal movement ouf of the cylinder member. When, however, a force is applied to the piston rod in the direction of inward movement of the piston rod with respect to the cylinder member, the blocking effect is dependent on the pressure of the pressurized gas within the gas chamber adjacent the second end of the hydraulic fluid chamber. Thus, in case of a higher force acting upon the piston rod in the inward movement direction thereof, the hydraulic blocking is overcome and an inward movement of the piston rod takes place.

From DE-U- 85 00 855 a positioning element with hydraulic blocking is known. With this known positioning element the piston-piston rod unit is provided with a separating wall which is axially substantially fixed with respect to the cylinder member. The piston-piston rod unit is prolongated by a second piston rod section located on an axial side of the piston member directed toward the second end of the hydraulic fluid chamber. This second piston rod section is sealingly guided through the separating wall and has a cross-sectional area substantially corresponding to the first piston rod section. Thus, the piston rod-piston unit is, when the valve unit is closed, substantially blocked in both axial directions by a volume of hydraulic fluid and is substantially independent of a supporting effect provided by the pressurized gas. In this known design, no substantially expelling effect occurs, when the valve unit is opened, because the sum of volumes of the hydraulic fluid compartments is substantially constant, irrespective of the axial position of the piston rod-piston unit with respect to the cylinder member, and because of lack of pressurized gas.
It is the object of the present invention to provide a hydraulically blockable gas spring in which the piston rod-piston unit is biased in axial direction by a pressurized gas, if an adjustment is to be performed, and in which on the other hand the axial position of the piston rod with respect to the cylinder can be positively blocked in both axial directions, after a desired adjustment has been performed. Moreover, it is desired that the gas spring can be easily manufactured and allows easy adjustment of the spring force. Manufacturing and assembling should be possible at favourable cost.

For achieving these objects and particularly the first-mentioned object, it is proposed for a hydraulically blockable gas spring as defined at the beginning of the specification that the separating wall is axially substantially fixed with respect to the cylinder member, that the piston rod-piston unit is prolongated by a second piston rod section located on an axial side of the piston member directed toward the second end and that this piston rod section is sealingly guided through the separating wall. Thus, the second piston rod section has a cross-sectional area for being exposed to gas pressure within the gas chamber. The piston rod-piston unit is substantially axially fixed with respect to the cylinder member, when the valve unit is closed by the respective hydraulic fluid within the respective hydraulic fluid compartments. When the valve unit is opened, the pressurized gas acting onto the cross-sectional area of the second piston rod section can expel the piston rod-piston unit out of the cylinder member.

The blockable gas spring of this invention may be used as a positioning element, if it is desirable, on the one hand, that the adjusting movement in one direction occurs automatically as a result of the biasing action of the pressurized gas in response to the opening of the valve unit, and when it is desired, on the other hand, that in an adjusted condition the length of the gas spring is unvariable against axial forces in both axial directions.

In a most compact embodiment, the hydraulic fluid passage means extend through the piston piston rod unit, and the valve unit is actuatable via an axial bore extending through the first piston rod section. For obtaining a compact design, it is further desirable that the gas chamber is accommodated within the cylinder member. In this case, the separating wall may be axially fixed within the cylinder member by radially inwardly directed deformations of said cylinder member.

The second piston rod section may be provided with a damper piston within the gas chamber. By such a damper piston the movement of the piston rod-piston unit may be damped, when the valve unit is opened. The damping action may be variable in response to the direction of movement. The damper piston may additionally have a guiding function by guiding engagement with the inner wall surface of the gas chamber and more particularly of the cylinder member.

In order to easily adapt a spring force of the gas spring to the intended use, it is desirable that a separate filling opening is provided for filling the gas chamber with pressurized gas. This means that the pressure of the gas within the gas chamber can be adapted after the gas spring has been completely assembled, and after the hydraulic fluid has been filled into the hydraulic fluid chamber. The filling of the hydraulic fluid into the hydraulic fluid chamber may be performed during assembly of the gas spring or by a further filling opening in communication with the hydraulic fluid chamber. By way of example, the hydraulic fluid may be introduced into the hydraulic fluid chamber through the passage of an end wall through which the first piston rod section extends, if a sealing element allocated to this passage acts as a check valve.

If the gas chamber is accommodated within the cylinder member, the gas chamber may be closed at the end thereof axially remote from the separating wall by a closure member connected with the cylinder member. This closure member may be provided with a filling opening for filling said pressurized gas into said gas chamber. The closure member may be provided with a fastening element for fastening the gas spring to a respective construction.

While the second piston rod section may be integral with the first piston rod section, a most easy construction is obtained, if the second piston rod section is separate from the first piston rod section and is secured to be piston member. In this case, the second piston rod section may have an end portion received with an axially directed bore of the piston member. This bore may be e.g. provided within a tubular extension of the piston member. If the hydraulic fluid passage means extend through said axially directed bore, the end portion of the second piston rod section may rest on a spacer sleeve within the axially directed bore, and this spacer sleeve may be provided with radial bores forming part of the hydraulic fluid passage means. If the valve unit comprises a valve member received by an axially directed valve channel within the cylinder member, if further this valve channel opens into the axially directed bore, and if a sealing element for this valve channel surrounds the valve member, the sealing element may be axially fixed within the piston member by an abutment plate, and this abutment plate may be axially fixed by the spacer sleeve.

In order to make the volume of the hydraulic fluid chamber constant, irrespective of the axial position of the piston rod-piston unit, it is desirable that the first and the second piston rod have identic diameter.

According to a further aspect, this invention is related to the use of a hydraulically blockable cylinder-piston unit for the head adjustment of a steering column in a motor vehicle; the cylinder-piston unit comprises again a cylinder member having an axis and a hydraulic fluid chamber confined within the cylinder member; the hydraulic fluid chamber has a first end and a second end axially opposite each other; an axially extending first piston rod section is sealingly guided through the first end of the hydraulic fluid chamber; the first piston rod section is connected with a piston member within the hydraulic fluid chamber; the first piston rod section and the piston member provide a piston rod-piston unit axially movable with respect to the cylinder member; the piston member defines two hydraulic fluid compartments within the hydraulic fluid chamber; the hydraulic fluid compartment are interconnectable by hydraulic fluid passage means; a valve unit is allocated to the hydraulic fluid passage means for selectively opening and closing the hydraulic fluid passage means; the valve unit is actuatable by external actuating means from outside the hydraulic fluid chamber; a gas chamber is provided adjacent the second end of the hydraulic fluid chamber; this gas chamber is separated from the hydraulic fluid chamber by a separating wall; the separating wall is axially substantially fixed with respect to the cylinder member; the piston rod-piston unit is prolongated by a second piston rod section located on an axial side of the piston member directed toward the second end and is sealingly guided through the separating wall; the second piston rod section has a cross-sectional area for being exposed to gas pressure within the gas chamber. A pressurized gas may be introduced into the gas chamber through a filling opening of a closing member of the gas chamber, such as to subject the piston rod-piston unit to a biasing action of a pressurized gas. The first and the second piston rod sections are again preferably of identic diameter for blocking the piston rod-piston unit axially against movement with respect to the cylinder member, in case of the valve unit being closed. Then, the head of the steering column is in a fixed position, when the valve unit is closed and is moved automatically toward an end position, when the valve unit is opened.

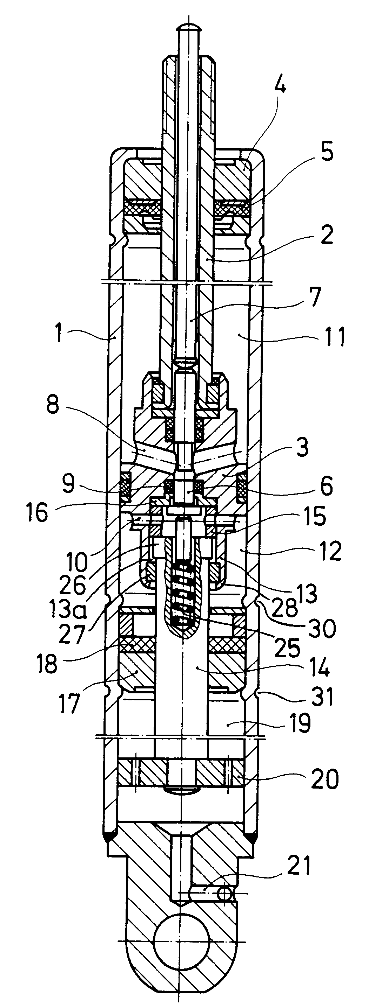

The various features of the invention are discussed especially in the accompanying claims which form a part of the disclosure. For the better understanding of the invention, its working advantages and specific effects, reference is now made to the accompanying drawing and the description, in which a preferred form of embodiment of the invention is discussed.

The invention is represented in the accompanying drawing and will be described in greater detail now.

The Figure shows a hydraulically blockable gas spring according to the invention in longitudinal section. Here a piston 3 connected with a first piston rod section 2 is axially movably guided in a cylinder 1, the first piston rod section 2 being guided in a piston rod guide unit 4 and sealed off to the exterior by a piston rod seal unit 5. A hydraulic fluid passage extends within the piston 3 between bores 8 and bores 10 connecting the compartments 11 and 12. A blocking valve unit comprises a valve pin 6 and an actuating plunger 7 situated in the tubular piston rod section 2. The valve pin 6 can be displaced axially by means of this actuating plunger 7 against the action of a valve spring 25. When a section with smaller diameter of the valve pin 6 travels over a seal element 9, a liquid-conducting connection is obtained between the compartment chambers 11 and 12. When the blocking valve unit is closed, as shown by the Figure, the seal element 9 lies in sealing manner on the valve pin 6, and the piston rod-piston unit is hydraulically blocked, that is to say that no liquid exchange can take place between the upper compartment chamber 11 and the lower compartment chamber 12.

At the lower end of the piston 3 there is a projection 13 with a bore 13a, in which a second piston rod section 14 is secured by a radially enlarged end portion 26, an abutment ring 27 and an inwardly curled zone 28 of the projection 13. The second piston rod section 14 rests on a spacer sleeve 15 which is pressed against an abutment plate 16. With the aid of this abutment plate 16, a chamber for the seal element 9 is limited. The separating wall 17 is fixed axially in the cylinder 1 by means of corrugations 30,31 and is penetrated by the second piston rod section 14. The second piston rod section 14 extends into a gas chamber 19 which has a gas filling under pressure and is sealed off from the fluid-filled lower compartment 12 by a seal 18 for the second piston rod section 14. The pressure of the gas filling in the gas chamber 19 determines the outward thrust force of the first piston rod section 2, when the blocking valve is opened. In the production of the gas spring, by way of example, the gas filling can be adjusted quite easily, according to the desired purpose of use. This is effected by way of a separate filling opening 21, which is closed, after gas filling has taken place, for example with a pressed-in ball. For the damping of the displacement movement when the blocking valve is opened, a damper piston 20 is provided which comprises at least one small passage opening for the gas filling in the gas chamber 19, which opening effects the damping.

The reference numbers in the claims serve only for facilitation of understanding and are not to be understood as a limitation.

## Claims

1. A hydraulically blockable gas spring comprising a cylinder member (1) having an axis, a hydraulic fluid chamber (11,12) being confined within said cylinder member (1), said hydraulic fluid chamber (11,12) having a first end and a second end axially opposite each other, an axially extending first piston rod section (2) being sealingly guided through said first end of said hydraulic fluid chamber (11,12), said first piston rod section (2) being connected with a piston member (3) within said hydraulic fluid chamber (11,12), said first piston rod section (2) and said piston member (3) providing a piston rod-piston unit (2,3,14) axially movable with respect to said cylinder member (1), said piston member (3) defining two hydraulic fluid compartments (11,12) within said hydraulic fluid chamber (11,12), said hydraulic fluid compartments (11,12) being interconnectable by hydraulic fluid passage means (8,10), a valve unit (6) being allocated to said hydraulic fluid passage means (8,10) for selectively opening and closing said hydraulic fluid passage means (8,10), said valve unit (6) being actuatable by external actuating means (7) from outside said hydraulic fluid chamber (11,12), said piston rod-piston unit (2,3,14) being subject to the biasing action of a volume of pressurized gas, said volume of pressurized gas being confined within a gas chamber (19) adjacent said second end of said hydraulic fluid chamber (11,12), said gas chamber (19) being separated from said hydraulic fluid chamber (11,12) by a separating wall (17),
characterized by said separating wall (17) being axially substantially fixed with respect to said cylinder member (1), said piston rod-piston unit (2,3,14) being prolongated by a second piston rod section (14) located on an axial side of said piston member (3) directed toward said second end and being sealingly guided through said separating wall (17), said second piston rod section (14) having a cross-sectional area for being exposed to gas pressure within said gas chamber (19).

2. A gas spring as set forth in claim 1, said hydraulic fluid passage means (8,10) extending through said piston rod-piston unit (2,3,14).

3. A gas spring as set forth in claim 2, said valve unit (6) being actuatable via an axial bore extending through said first piston rod section (2).

4. A gas spring as set forth in one of claims 1 to 3, said gas chamber (19) being accommodated within said cylinder member (1).

5. A gas spring as set forth in one of claims 1 to 4, said separating wall (17) being axially fixed within said cylinder member (1) by radially inwardly directed deformations (30,31) of said cylinder member (1).

6. A gas spring as set forth in one of claims 1 to 5, said second piston rod section (14) being provided with a damper piston (20) within said gas chamber (19).

7. A gas spring as set forth in one of claims 1 to 6, a separate filling opening (21) being provided for filling said gas chamber (19) with pressurized gas.

8. A gas spring as set forth in one of claims 1 to 7, said gas chamber (19) being accommodated within said cylinder member (1), said gas chamber (19) being closed at an end thereof axially remote from said separating wall (17) by a closure member connected with said cylinder member (1), said closure member being provided with a filling opening (21).

9. A gas spring as set forth in claim 8, said closure member being provided with a fastening element for fastening said gas spring to a respective construction.

10. A gas spring as set forth in one of claims 1 to 9, said second piston rod section (14) being separate from said first piston rod section (2) and being secured to said piston member (3).

11. A gas spring as set forth in claim 10, said second piston rod section (14) having an end portion (26) being received within an axially directed bore (13a) of said piston member (3).

12. A gas spring as set forth in claim 11, said hydraulic fluid passage means (8,10) extending through said axially directed bore (13a), said end portion (26) of said second piston rod section (14) resting on a spacer sleeve (15) within said axially directed bore (13a), said spacer sleeve (15) being provided with radial bores, said radial bores forming part of said hydraulic fluid passage means (8,10).

13. A gas spring as set forth in claim 12, said valve unit (6) comprising a valve member (6) received by an axially directed valve channel provided within said piston member (3) and opening into said axially directed bore (13a), a sealing element (9) surrounding said valve member (6), said sealing element (9) being axially fixed within said piston member (3) by an abutment plate (16), said abutment plate (16) being axially fixed by said spacer sleeve (15).

14. A gas spring as set forth in one of claims 1 to 13, said first and second piston rod section (2,14) having identic diameter.

15. The use of a hydraulically blockable cylinder-piston unit for the head adjustment of a steering column in a motor vehicle, said cylinder-piston unit comprising a cylinder member (1) having an axis, a hydraulic fluid chamber (11,12) being confined within said cylinder member (1), said hydraulic fluid chamber (11,12) having a first end and a second end axially opposite each other, an axially extending first piston rod section (2) being sealingly guided through said first end of said hydraulic fluid chamber (11,12), said first piston rod section (2) being connected with a piston member (3) within said hydraulic fluid chamber (11,12), said first piston rod section (2) and said piston member (3) providing a piston rod-piston unit (2,3,14) axially movable with respect to said cylinder member (1), said piston member (3) defining two hydraulic fluid compartments (11,12) within said- hydraulic fluid chamber (11,12), said hydraulic fluid compartments (11,12) being interconnectable by hydraulic fluid passage means (8,10), a valve unit (6) being allocated to said hydraulic fluid passage means (8,10) for selectively opening and closing said hydraulic fluid passage means (8,10), said valve unit (6) being actuatable by external actuating means (7) from outside said hydraulic fluid chamber (11,12), a gas chamber (19) being provided adjacent said second end of said hydraulic fluid chamber (11,12) said gas chamber (19) being separated from said hydraulic fluid chamber (11,12) by a separating wall (17), said separating wall. (17) being axially substantially fixed with respect to said cylinder member (1), said piston rod-piston unit (2,3,14) being prolongated by a second piston rod section (14) located on an axial side of said piston member (3) directed toward said second end and being sealingly guided through said separating wall (17), said second piston rod section (14) having a cross-sectional area for being exposed to gas pressure within said gas chamber (19).

## Patentansprüche

1. Hydraulisch blockierbare Gasfeder, umfassend ein eine Achse aufweisendes Zylinderelement (1), wobei in dem Zylinderelement (1) eine Hydraulik-Fluid-Kammer (11,12) eingeschlossen ist, wobei die Hydraulik-Fluid-Kammer (11,12) ein erstes Ende und ein zweites Ende aufweist, die einander axial gegenüberliegen, wobei ein sich axial erstreckender erster Kolbenstangenabschnitt (2) durch das erste Ende der Hydraulik-Fluid-Kammer (11,12) dichtend geführt ist, wobei der erste Kolbenstangenabschnitt (2) mit einem innerhalb der Hydraulik-Fluid-Kammer (11,12) untergebrachten Kolbenelement (3) verbunden ist, wobei der erste Kolbenstangenabschnitt (2) und das Kolbenelement (3) eine in bezug auf das Zylinderelement (1) axial bewegbare Kolbenstange-Kolbeneinheit (2,3,14) bereitstellen, wobei das Kolbenelement (3) zwei Hydraulik-Fluid-Abteile (11,12) innerhalb der Hydraulik-Fluid-Kammer (11,12) bildet, wobei die Hydraulik-Fluid-Abteile (11,12) durch Hydraulik-Fluid-Durchgangsmittel (8,10) miteinander verbindbar sind, wobei eine Ventileinheit (6) den Hydraulik-Fluid-Durchgangsmitteln (8,10) zum selektiven Öffnen und Schließen der Hydraulik-Fluid-Durchgangsmittel (8,10) zugeordnet ist, wobei die Ventileinheit (6) von außerhalb der Hydraulik-Fluid-Kammer (11,12) durch äußere Betätigungsmittel (7) betätigbar ist, wobei die Kolbenstange-Kolbeneinheit (2,3, 14) der vorspannenden Wirkung eines Volumens unter Druck stehenden Gases ausgesetzt ist, wobei das Volumen unter Druck stehenden Gases innerhalb einer dem zweiten Ende der Hydraulik-Fluid-Kammer (11,12) benachbarten Gaskammer (19) eingeschlossen ist, wobei die Gaskammer (19) von der Hydraulik-Fluid-Kammer (11,12) durch eine Trennwand (17) getrennt ist,
**dadurch gekennzeichnet**,
daß die Trennwand (17) in bezug auf das Zylinderelement (1) axial im wesentlichen festgelegt ist, wobei die Kolbenstange-Kolbeneinheit (2,3,14) durch einen zweiten Kolbenstangenabschnitt (14) verlängert ist, der auf einer axialen Seite des Kolbenelements (3) angeordnet, zum zweiten Ende hin gerichtet und durch die Trennwand (17) dichtend geführt ist, wobei der zweite Kolbenstangenabschnitt (14) eine Querschnittsfläche aufweist, die dafür bestimmt ist, einem Gasdruck innerhalb der Gaskammer (19) ausgesetzt zu sein.

2. Gasfeder nach Anspruch 1, wobei die Hydraulik-Fluid-Durchgangsmittel (8,10) sich durch die Kolbenstange-Kolbeneinheit (2,3,14) erstrecken.

3. Gasfeder nach Anspruch 2, wobei die Ventileinheit (6) über eine sich durch den ersten Kolbenstangenabschnitt (2) erstreckende Axialbohrung betätigbar ist.

4. Gasfeder nach einem der Ansprüche 1 bis 3, wobei die Gaskammer (19) innerhalb des Zylinderelements (1) untergebracht ist.

5. Gasfeder nach einem der Ansprüche 1 bis 4, wobei die Trennwand (17) innerhalb des Zylinderelements (1) durch radial nach innen gerichtete Verformungen (30,31) des Zylinderelements (1) axial festgelegt ist.

6. Gasfeder nach einem der Ansprüche 1 bis 5, wobei der zweite Kolbenstangenabschnitt (14) mit einem in der Gaskammer (19) untergebrachten Dämpferkolben (20) versehen ist.

7. Gasfeder nach einem der Ansprüche 1 bis 6, wobei eine getrennte Füllöffnung (21) zum Füllen der Gaskammer (19) mit unter Druck stehendem Gas vorgesehen ist.

8. Gasfeder nach einem der Ansprüche 1 bis 7, wobei die Gaskammer (19) innerhalb des Zylinderelements (1) untergebracht ist, die Gaskammer (19) an einem von der Trennwand (17) axial entfernten Ende davon durch ein mit dem Zylinderelement (1) verbundenes Schließelement geschlossen ist, wobei das Schließelement mit einer Füllöffnung (21) versehen ist.

9. Gasfeder nach Anspruch 8, wobei das Schließelement mit einem Befestigungselement zum Befestigen der Gasfeder an einem jeweiligen Aufbau versehen ist.

10. Gasfeder nach einem der Ansprüche 1 bis 9, wobei der zweite Kolbenstangenabschnitt (14) von dem erstem Kolbenstangenabschnitt (2) getrennt und an dem Kolbenelement (3) befestigt ist.

11. Gasfeder nach Anspruch 10, wobei der zweite Kolbenstangenabschnitt (14) einen Endabschnitt (26) aufweist, der innerhalb einer axial gerichteten Bohrung (13a) des Kolbenelements (3) aufgenommen ist.

12. Gasfeder nach Anspruch 11, wobei die Hydraulik-Fluid-Durchgangsmittel (8,10) sich durch die axial gerichtete Bohrung (13a) erstrecken, der Endabschnitt (26) des zweiten Kolbenstangenabschnitts (14) auf einer innerhalb der axial gerichteten Bohrung (13a) angeordneten Abstandshülse (15) lagert, wobei die Abstandshülse (15) mit Radialbohrungen versehen ist, wobei die Radialbohrungen einen Teil der Hydraulik-Fluid-Durchgangsmittel (8,10) bilden.

13. Gasfeder nach Anspruch 12, wobei die Ventileinheit (6) ein Ventilelement (6) umfaßt, das in einem innerhalb des Kolbenelements (3) vorgesehenen, axial gerichteten und sich in die axial gerichtete Bohrung (13a) öffnenden Ventilkanal aufgenommen ist, wobei ein Dichtelement (9) das Ventilelement (6) umgibt, wobei das Dichtelement (9) innerhalb des Kolbenelements (3) durch eine Anlageplatte (16) axial festgelegt ist, wobei die Anlageplatte (16) durch die Abstandshülse (15) axial festgelegt ist.

14. Gasfeder nach einem der Ansprüche 1 bis 13, wobei der erste und der zweite Kolbenstangenabschnitt (2,14) den gleichen Durchmesser aufweisen.

15. Verwendung einer hydraulisch blockierbaren Zylinder-Kolben-Einheit für die Kopfeinstellung einer Lenksäule in einem Motorfahrzeug, die Zylinder-Kolben-Einheit umfassend ein eine Achse aufweisendes Zylinderelement (1), wobei in dem Zylinderelement (1) eine Hydraulik-Fluid-Kammer (11,12) eingeschlossen ist, wobei die Hydraulik-Fluid-Kammer (11,12) ein erstes Ende und ein zweites Ende aufweist, die einander axial gegenüberliegen, wobei ein sich axial erstreckender erster Kolbenstangenabschnitt (2) durch das erste Ende der Hydraulik-Fluid-Kammer (11,12) dichtend geführt ist, wobei der erste Kolbenstangenabschnitt (2) mit einem innerhalb der Hydraulik-Fluid-Kammer (11,12) untergebrachten Kolbenelement (3) verbunden ist, wobei der erste Kolbenstangenabschnitt (2) und das Kolbenelement (3) eine in bezug auf das Zylinderelement (1) axial bewegbare Kolbenstange-Kolbeneinheit (2,3,14) bereitstellen, wobei das Kolbenelement (3) zwei Hydraulik-Fluid-Abteile (11,12) innerhalb der Hydraulik-Fluid-Kammer (11,12) bildet, wobei die Hydraulik-Fluid-Abteile (11,12) durch Hydraulik-Fluid-Durchgangsmittel (8,10) miteinander verbindbar sind, wobei eine Ventileinheit (6) den Hydraulik-Fluid-Durchgangsmitteln (8,10) zum selektiven Öffnen und Schließen der Hydraulik-Fluid-Durchgangsmittel (8,10) zugeordnet ist, wobei die Ventileinheit (6) von außerhalb der Hydraulik-Fluid-Kammer (11,12) durch äußere Betätigungsmittel (7) betätigbar ist, wobei eine dem zweiten Ende der Hydraulik-Fluid-Kammer (11,12) benachbarte Gaskammer (19) vorgesehen ist, wobei die Gaskammer (19) von der Hydraulik-Fluid-Kammer (11,12) durch eine Trennwand (17) getrennt ist, wobei die Trennwand (17) in bezug auf das Zylinderelement (1) axial im wesentlichen festgelegt ist, wobei die Kolbenstange-Kolbeneinheit (2,3,14) durch einen zweiten Kolbenstangenabschnitt (14) verlängert ist, der auf einer axialen Seite des Kolbenelements (3) angeordnet, zum zweiten Ende hin gerichtet und durch die Trennwand (17) dichtend geführt ist, wobei der zweite Kolbenstangenabschnitt (14) eine Querschnittsfläche aufweist, die dafür bestimmt ist, einem Gasdruck innerhalb der Gaskammer (19) ausgesetzt zu sein.

## Revendications

1. Ressort à gaz à blocage hydraulique comprenant un élément formant cylindre (1) ayant un axe, une chambre à fluide hydraulique (11, 12) aménagée à l'intérieur dudit élément formant cylindre (1), ladite chambre à fluide hydraulique (11, 12) ayant une première extrémité et une deuxième extrémité opposées l'une à l'autre dans le sens axial, une première section de tige de piston (2) s'étendant dans le sens axial étant guidée de manière étanche à travers ladite première extrémité de ladite chambre à fluide hydraulique (11, 12), ladite première section de tige de piston (2) étant reliée à un élément formant piston (3) à l'intérieur de ladite chambre à fluide hydraulique (11, 12), ladite première section de tige de piston (2) et le dit élément formant piston (3) formant une unité piston-tige de piston (2, 3, 14) mobile dans le sens axial par rapport audit élément formant cylindre (1), ledit élément formant piston (3) définissant deux compartiments de fluide hydraulique (11, 12) à l'intérieur de ladite chambre à fluide hydraulique (11, 12), lesdits compartiments de fluide hydraulique (11, 12) pouvant être reliés l'un à l'autre par des moyens de passage de fluide hydraulique (8, 10), une unité de vanne (6) étant allouée auxdits moyens des passage de fluide hydraulique (8, 10) pour ouvrir et fermer sélectivement lesdits moyens de passage de fluide hydraulique (8, 10), ladite unité de vanne (6) pouvant être actionnée par des moyens d'actionnement externes (7) depuis l'extérieur de la chambre à fluide hydraulique (11, 12), ladite unité piston-tige de piston (2, 3, 14) étant soumise à l'action d'un volume de gaz pressurisé, ledit volume de gaz pressurisé étant confiné à l'intérieur d'une chambre à gaz (19) proche de ladite deuxième extrémité de ladite chambre à fluide hydraulique (11, 12), ladite chambre à gaz (19) étant séparée de ladite chambre à fluide hydraulique (11, 12) par une cloison séparatrice (17), caractérisé en ce que ladite cloison séparatrice (17) est substantiellement fixe dans le sens axial par rapport audit élément formant cylindre (1), ladite unité piston-tige de piston (2, 3, 14) est prolongée par une deuxième section de tige de piston (14) située sur un côté axial dudit élément formant piston (3) dirigé vers ladite deuxième extrémité et est guidée de manière étanche à travers ladite cloison séparatrice (17), ladite deuxième section de tige de piston (14) ayant une surface de section transversale telle qu'elle est exposée à la pression du gaz à l'intérieur de ladite chambre à gaz (19).

2. Ressort à gaz selon la revendication 1, lesdits moyens de passage du fluide hydraulique (8, 10) s'étendant à travers ladite unité piston-tige de piston (2, 3, 14).

3. Ressort à gaz selon la revendication 2, ladite unité de vanne (6) pouvant être actionnée par l'intermédiaire d'un perçage axial s'étendant à travers ladite première section de tige de piston (2).

4. Ressort à gaz selon l'une des revendications 1 à 3, ladite chambre à gaz (19) étant logée à l'intérieur dudit élément formant cylindre (1).

5. Ressort à gaz selon l'une des revendications 1 à 4, ladite cloison séparatrice (17) étant fixe dans le sens axial à l'intérieur dudit élément formant cylindre (1) par des déformations (30, 31) dirigées vers l'intérieur dans le sens radial dudit élément formant cylindre (1).

6. Ressort à gaz selon l'une des revendications 1 à 5, ladite deuxième section de tige de piston (14) étant munie d'un piston amortisseur (20) à l'intérieur de ladite chambre à gaz (19).

7. Ressort à gaz selon l'une des revendications 1 à 6, une ouverture de remplissage séparée (21) étant prévue pour remplir ladite chambre à gaz (19) avec du gaz pressurisé.

8. Ressort à gaz selon l'une des revendications 1 à 7, ladite chambre à gaz (19) étant logée à l'intérieur dudit élément formant cylindre (1), ladite chambre à gaz (19) étant fermée à un extrémité de celle-ci à distance axiale de la cloison séparatrice (17) par un élément de fermeture relié audit élément formant cylindre (1), ledit élément de fermeture étant muni d'une ouverture de remplissage (21).

9. Ressort à gaz selon la revendication 8, ledit élément de fermeture étant muni d'un élément d'attache pour attacher ledit ressort à gaz à une construction respective.

10. Ressort à gaz selon l'une des revendications 1 à 9, ladite deuxième section de tige de piston (14) étant séparée de ladite première section de tige de piston (2) et étant fixée audit élément formant piston (3).

11. Ressort à gaz selon la revendication 10, ladite deuxième section de tige de piston (14) ayant une partie d'extrémité (26) étant reçue dans un perçage (13a) dirigé dans le sens axial dudit élément formant piston (3).

12. Ressort à gaz selon la revendication 11, lesdits moyens de passage de fluide hydraulique (8, 10) s'étendant à travers ledit perçage (13a) dirigé dans le sens axial, ladite partie d'extrémité (26) de ladite deuxième section de tige de piston (14) reposant sur un manchon d'espacement (15) à l'intérieur dudit perçage (13a) dirigé dans le sens axial, ledit manchon d'espacement (15) étant muni de perçages radiaux, lesdits perçages radiaux faisant partie desdits moyens de passage du fluide hydraulique (8, 10).

13. Ressort à gaz selon la revendication 12, ladite unité de vanne (6) comprenant un élément de vanne (6) reçu par un conduit de vanne dirigé dans le sens axial prévu à l'intérieur dudit élément formant piston (3) et débouchant dans ledit perçage (13a) dirigé dans le sens axial, un élément d'étanchéité (9) entourant ledit élément de vanne (6), ledit élément d'étanchéité (9) étant fixé dans le sens axial audit élément formant piston (3) par une plaque de butée (16), ladite plaque de butée (16) étant fixée dans le sens axial par ledit manchon d'espacement (15).

14. Ressort à gaz selon l'une des revendications 1 à 13, lesdites première et deuxième sections de tige de piston (2, 14) ayant un diamètre identique.

15. Utilisation d'une unité cylindre-piston à blocage hydraulique pour l'ajustement de tête d'une colonne de direction dans un véhicule à moteur, l'unité cylindre-piston comprenant un élément formant cylindre (1) ayant un axe et une chambre à fluide hydraulique (11, 12) aménagée à l'intérieur dudit élément formant cylindre (1), ladite chambre à fluide hydraulique (11, 12) ayant une première extrémité et une deuxième extrémité opposées l'une à l'autre dans le sens axial, une première section de tige de piston (2) s'étendant dans le sens axial étant guidée de manière étanche à travers ladite première extrémité de ladite chambre à fluide hydraulique (11, 12), ladite première section de tige de piston (2) étant reliée à un élément formant piston (3) à l'intérieur de ladite chambre à fluide hydraulique (11, 12), ladite première section de tige de piston (2) et ledit élément formant piston (3) formant une unité piston-tige de piston (2, 3, 14) mobile dans le sens axial par rapport audit élément formant cylindre (1), ledit élément formant piston (3) définissant deux compartiments de fluide hydraulique (11, 12) à l'intérieur de ladite chambre à fluide hydraulique (11, 12), lesdits compartiments de fluide hydraulique (11, 12) pouvant être reliés l'un à l'autre par des moyens de passage du fluide hydraulique (8, 10), une unité de vanne (6) étant allouée auxdits moyens de passage du fluide hydraulique (8, 10) pour ouvrir et fermer sélectivement lesdits moyens de passage du fluide hydraulique (8, 10), ladite unité de vanne (6) pouvant être actionnée par des moyens d'actionnement externes (7) depuis l'extérieur de ladite chambre à fluide hydraulique (11, 12), une chambre à gaz (19) étant prévue à proximité de ladite deuxième extrémité de ladite chambre à fluide hydraulique (11, 12), ladite chambre à gaz (19) étant séparée de ladite chambre à fluide hydraulique (11, 12) par une cloison séparatrice (17), ladite cloison séparatrice (17) étant substantiellement fixe dans le sens axial par rapport audit élément formant cylindre (1), ladite unité piston-tige de piston (2, 3, 14) étant prolongée par une deuxième section de tige de piston (14) située sur un côté axial dudit élément formant piston (3) dirigé vers ladite deuxième extrémité et étant guidée de manière étanche à travers ladite cloison séparatrice (17), ladite deuxième section de tige de piston (14) ayant une surface de section transversale telle qu'elle est exposée à la pression du gaz à l'intérieur de la chambre à gaz (19).
